# EUROPÄISCHE PATENTSCHRIFT

(11) **EP 0 916 380 B1**
(45) Veröffentlichungstag und Bekanntmachung des Hinweises auf die Patenterteilung: **08.12.2004**
(21) Anmeldenummer: 98120068.6
(22) Anmeldetag: 23.10.1998
(51) Int. Cl.: B01D 46/24, B01D 46/46

(54) **Verfahren zum Überwachen der Funktionsfähigkeit einer Filteranlage zum Entstauben von Gasen**
Process for controlling the operability of a filtering device for removing dust from gases
Procédé de contrôle du fonctionnement d'un filtre de séparation des poussières d'un courant gazeux

(30) Priorität: 17.11.1997 DE 19750799
(43) Veröffentlichungstag der Anmeldung: 19.05.1999
(73) Patentinhaber: MG Technologies AG, 60325 Frankfurt am Main (DE)
(72) Erfinder: Dehn, Günther, 46485 Wesel (DE); Krein, Joachim, 64293 Darmstadt (DE); Moellenhoff, Horst Dr., 45470 Mühlheim (Ruhr) (DE); Schmitt, Joachim, 47506 Neukirchen-Vluyn (DE)
(74) Vertreter: Stenger, Watzke & Ring Patentanwälte

(56) Entgegenhaltungen:
- EP-A- 0 020 949
- DE-A- 19 527 311

## Beschreibung

Die Erfindung betrifft ein Verfahren zum Überwachen der Funktionsfähigkeit einer Filteranlage zum Entstauben von Gasen, wobei die Anlage zahlreiche poröse, gasdurchlässige Filterelemente mit mindestens einer Rohgasseite und mindestens einer Reingasseite aufweist, wobei die Rohgasseite vom zu reinigenden Gas (Rohgas) angeströmt wird und die Reingasseite mit einem Reingaskanal verbunden ist, wobei in den Reingaskanal und in die Filterelemente zum periodischen Ablösen von an der Rohgasseite haftendem Staub Pulsgas in die Filterelemente geleitet wird, welches aus einem Druckbehälter kommt.

Filteranlagen dieser Art sind bekannt und zum Beispiel in EP-B-0 428 862 und DE-A-195 27 311 beschrieben. Die porösen Filterkerzen oder Filterelemente sind z. B. aus Keramik, Fasermaterial oder auch Metall, sie können z. B. stehend oder hängend oder in beliebiger anderer Lage angeordnet und mit dem zugehörigen Reingaskanal verbunden sein. Eine Filteranlage weist üblicherweise mehrere Gruppen von Filterelementen auf, die nebeneinander und/oder übereinander in einem Gehäuse angeordnet sind, wobei jede Gruppe getrennt von den anderen Gruppen abgereinigt werden kann. Hierzu sind Ventile nötig, wobei es wichtig ist, Störungen der Funktionsfähigkeit dieser Ventile frühzeitig festzustellen, um negative Auswirkungen auf die Filterelemente vermeiden zu können.

Der Erfindung liegt die Aufgabe zugrunde, die Funktionsfähigkeit der Filteranlage zu überwachen und insbesondere mechanische Störungen festzustellen, die das Abreinigen mit Pulsgas beeinträchtigen. Erfindungsgemäß wird die Aufgabe beim eingangs genannten Verfahren dadurch gelöst, daß der Druckbehälter über einen gasdurchlässigen Kanal mit einer Meßkammer mit kleinerem Volumen als der Druckbehälter verbunden ist, und daß während des Ausströmens von Pulsgas aus dem Druckbehälter in den Reingaskanal und zu den Filterelementen die Druckdifferenz Δp = p1 - p2 gemessen und überwacht wird, wobei p1 der statische Druck in der Meßkammer und p2 der statische Druck im Druckbehälter ist. Die kurzzeitige Druckdifferenz zwischen der Meßkammer und dem Druckbehälter tritt mit dem schlagartigen Ausströmen des Pulsgases aus dem Druckbehälter dadurch auf, daß das Gas, z. B. Luft, nur verzögert von der Meßkammer durch den Kanal teilweise in den Druckbehälter abströmt.

Es kann zweckmäßig sein, im Kanal zwischen der Meßkammer und dem Druckbehälter eine Blende anzuordnen, die verstellbar oder leicht auswechselbar ist und die den Strömungsquerschnitt im Innern des Kanals in regelbarer Weise bestimmt.

Ausgestaltungsmöglichkeiten des Verfahrens werden mit Hilfe der Zeichnung erläutert. Es zeigt:
- Fig. 1: eine Filteranlage in schematischer Darstellung,
- Fig. 2: den zeitlichen Verlauf der Druckdifferenz und
- Fig. 3: eine Ausgestaltung des Kanals zwischen der Meßkammer und dem Druckbehälter.

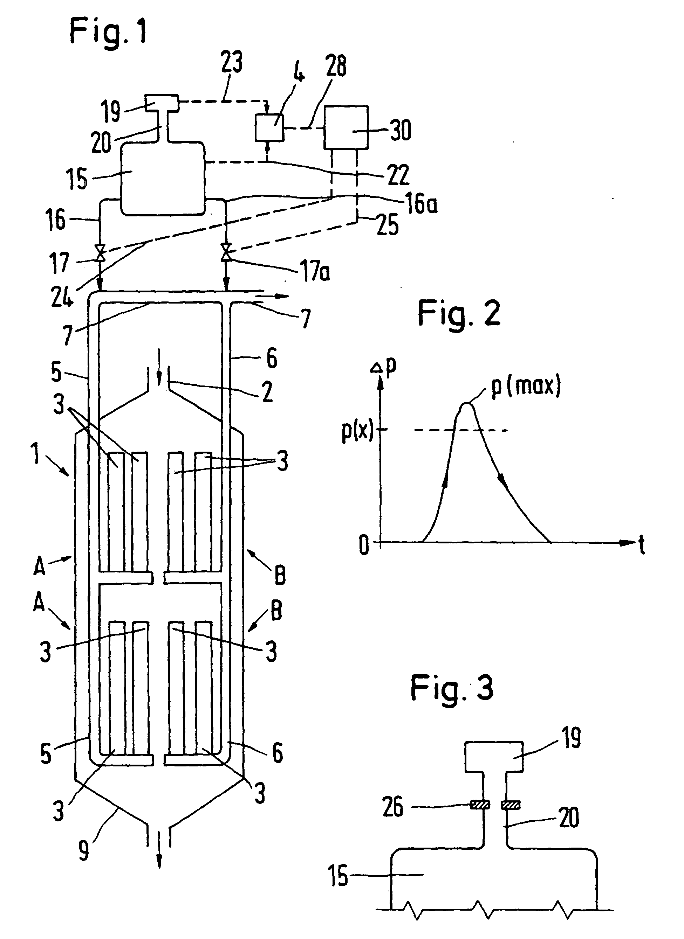

Die Filteranlage der Fig. 1 weist im Gehäuse (1) einen Einlaß (2) für das zu entstaubende Rohgas auf. Das Rohgas kann heiß sein und Temperaturen bis etwa 1000°C aufweisen. Im Gehäuse (1) sind zahlreiche starre Filterelemente (3) angeordnet, die aus porösem, gasdurchlässigem Material, zum Beispiel Keramik, gefertigt sind. Im vorliegenden Fall haben die Filterelemente die Form hohler Zylinder, die oben geschlossen sind. Die Außenseite der Zylinder ist die Rohgasseite und der Innenraum gehört zur Reingasseite. In Fig. 1 bilden die Filterelemente eine erste Gruppe (A) und eine zweite Gruppe (B), die jeweils mit getrennten Reingaskanälen (5) und (6) verbunden sind. Das entstaubte Gas wird vom Innenraum der Filterelemente (3) durch den Reingaskanal (5) oder (6) zum Sammelkanal (7) geführt und abgeleitet. Der abgetrennte Staub löst sich von der Außenseite der Filterelemente, fällt zum Gehäuseboden (9) und wird ausgeschleust.

Nach einer gewissen Betriebszeit ist es zweckmäßig, die Rohgasseite der Filterelemente von anhaftendem Staub möglichst weitgehend zu befreien. Zu diesem Zweck leitet man einen oder mehrere Gasstöße (Pulsgas) aus einem Druckbehälter (15) zum Beispiel durch die Leitung (16) und das kurzzeitig geöffnete Ventil (17) in den Reingaskanal (5), in den Innenraum der Filterelemente (3) und durch deren poröse Wand nach außen. In analoger Weise verfährt man zum Abreinigen der Filterelemente (3) der Gruppe (B), indem man das Ventil (17a) kurzzeitig öffnet und Pulsgas durch die Leitung (16a), durch den Reingaskanal (6) und in die zugehörigen Filterelemente (3) leitet. Der Druckbehälter (15) ist zum Beispiel mit Luft oder einem anderen Gas gefüllt, sein maximaler Druck ist erheblich größer als der Druck im Gehäuse (1). Der Druck im Behälter (15) beträgt üblicherweise ein Mehrfaches des Drucks im Gehäuse (1). Zum Erzeugen eines Gas-Impulses wird das Ventil (17) oder (17a) für eine kurze Zeit üblicherweise im Bereich von 0,1 bis 1 sec geöffnet. Dabei sinkt der Druck im Behälter (15) deutlich ab.

Mit dem Druckbehälter (15) ist eine Meßkammer (19) durch einen Kanal (20) verbunden. Üblicherweise beträgt das Volumen des Behälters (15) ein Vielfaches des Volumens der Kammer (19). Der Kanal (20) hat einen relativ kleinen inneren Durchmesser, der üblicherweise im Bereich von 0,2 bis 50 mm liegt.

Durch die Leitungen (22) und (23) ist eine Differenzdruck-Meßeinrichtung (4) mit dem Druckbehälter (15) und der Meßkammer (19) verbunden, und eine Signalleitung (28) führt zur Steuereinheit (30). Ferner bestehen Signalleitungen (24) und (25) zu den Ventilen (17) und (17a).

Sobald zum Beispiel das Ventil (17) kurzzeitig geöffnet wird, um Pulsgas in den Kanal (5) zu leiten, entsteht kurzzeitig eine Druckdifferenz Δp = p1 - p2 , wobei p1 der statische Druck in der Meßkammer (19) und p2 der statische Druck im Druckbehälter (15) ist.

Fig. 2 zeigt den kurzzeitigen Anstieg dieser Druckdifferenz innerhalb einiger Millisekunden in Abhängigkeit von der Zeit t bis zu einem Druckmaximum p(max) und der anschließende rasche Abfall der Druckdifferenz bis zum Wert 0. Die Steuereinheit (30) stellt fest, ob der Druck p(max) größer, gleich oder niedriger als ein Schwellenwert p(x) ist. Erreicht p(max) den Wert p(x) nicht, so wird zweckmäßigerweise ein Alarm ausgelöst. Wenn nämlich zum Beispiel die Abreinigung der Filtergruppe (A) vorgesehen ist und zu diesem Zweck das Ventil (17) kurzzeitig geöffnet wird, entsteht dann, wenn das Ventil (17) nicht oder nicht richtig öffnet, eine zu niedrige Druckdifferenz im Druckverlauf der Fig. 2.

Durch das frühzeitige Erkennen einer Ventilstörung können Folgeschäden im Filterprozeß, wie:
- Erhöhung des Filterdruckverlustes aufgrund nicht abgereinigter Filterelemente,
- Bildung von Staubbrücken zwischen den Filterelementen und
- Bruch von Filterelementen
vermieden werden.

Fig. 3 zeigt in schematischer Darstellung eine im Kanal (20) angeordnete Blende (26), die verstellbar oder zumindest auswechselbar ausgebildet ist. Durch die Blende (26) läßt sich der Strömungsquerschnitt für das von der Meßkammer (19) zum Druckbehälter (15) strömende Gas im Kanal (20) einstellen und so der gewünschte Verlauf der Druckdifferenz über die Zeit, vergleiche Fig. 2, in gewünschter Weise regulieren.

### Beispiel:

Eine der Zeichnung entsprechende Filteranlage weist 56 Filterelemente (3) aus Keramik auf. Dem Gehäuse (1) führt man ein Rohgas mit 850°C zu, das pro Nm³ 30 g Staub enthält, der Druck im Gehäuse (1) beträgt 12 bar Das aus der Anlage durch den Sammelkanal (7) abgeführte Reingas enthält noch 3 mg/Nm³ Staub.

Der Behälter (15) hat ein Volumen von 0,34 m³, er enthält Luft von 22 bar und 50°C. Beim Abreinigen der Filterelemente sinkt der Druck im Behälter (15) zeitweise auf 20 bar. Die Meßkammer (19) hat ein Volumen von nur 1 Liter, die Blende (26) im Verbindungskanal (20) läßt der Luftströmung eine Öffnung mit einem Durchmesser von 1 mm frei. Beim Ausströmen von Pulsgas beträgt p(max) = 1,5 bar; der Schwellenwert p(x) liegt bei 1 bar.

## Patentansprüche

1. Verfahren zum Überwachen der Funktionsfähigkeit einer Filteranlage zum Entstauben von Gasen, wobei die Anlage zahlreiche poröse, gasdurchlässige Filterelemente mit mindestens einer Rohgasseite und mindestens einer Reingasseite aufweist, wobei die Rohgasseite vom zu reinigenden Gas (Rohgas) angeströmt wird und die Reingasseite mit einem Reingaskanal verbunden ist, wobei in den Reingaskanal und in die Filterelemente zum periodischen Ablösen von an der Rohgasseite haftendem Staub Pulsgas in die Filterelemente geleitet wird, welches aus einem Druckbehälter kommt, **dadurch gekennzeichnet, daß** der Druckbehälter über einen gasdurchlässigen Kanal mit einer Meßkammer mit kleinerem Volumen als der Druckbehälter verbunden ist, und daß während des Ausströmens von Pulsgas aus dem Druckbehälter in den Reingaskanal und zu den Filterelementen die Druckdifferenz Δp = p1 - p2 gemessen und überwacht wird, wobei p1 der statische Druck in der Meßkammer und p2 der statische Druck im Druckbehälter ist.

2. Verfahren nach Anspruch 1, **dadurch gekennzeichnet, daß** dann, wenn das Maximum der Druckdifferenz einen vorgegebenen Mindestwert unterschreitet, ein Alarmsignal ausgelöst wird.

3. Verfahren nach Anspruch 1 oder 2, **dadurch gekennzeichnet, daß** der Kanal zwischen dem Druckbehälter und der Meßkammer eine den Strömungsquerschnitt bestimmende Blende aufweist.

## Claims

1. A process of monitoring the operability of a filtering plant for dedusting gases, wherein the plant comprises numerous porous, gas-permeable filter elements having at least one raw-gas side and at least one clean-gas side, wherein the gas to be purified (raw gas) flows towards the raw-gas side and the clean-gas side is connected to a clean-gas passage, wherein pulse gas is fed into the clean-gas passage and into the filter elements for periodically detaching dust attached to the raw-gas side, which gas comes from a pressure vessel, **characterised in that** the pressure vessel is connected by a gas-permeable passage to a measuring chamber having a smaller volume than the pressure vessel, and that while pulse gas is flowing out of the pressure vessel into the clean-gas passage and to the filter elements, the pressure difference Δp = p1 - p2 is measured and monitored, where p1 is the static pressure in the measuring chamber and p2 is the static pressure in the pressure vessel.

2. A process according to claim 1, **characterised in that** an alarm signal is triggered when the maximum of the pressure difference falls below a predetermined minimum value.

3. A process according to claim 1 or 2, **characterised in that** the passage between the pressure vessel and the measuring chamber has an orifice plate determining the flow cross-section.

## Revendications

1. Procédé de contrôle de l'aptitude à fonctionner d'une installation de filtration pour le dépoussiérage de gaz, l'installation comprenant d'innombrables éléments filtrants poreux perméables au gaz ayant au moins un côté pour le gaz brut et au moins un côté pour le gaz épuré, du gaz à épurer (gaz brut) affluant par le côté pour le gaz brut et le côté pour le gaz épuré communiquant avec un conduit pour le gaz épuré, du gaz pulsé dans les éléments filtrants étant envoyé dans le conduit pour le gaz épuré et dans les éléments filtrants pour détacher périodiquement de la poussière adhérant au côté pour le gaz brut, ce gaz pulsé provenant d'une cuve sous pression, **caractérisé en ce que** la cuve sous pression communique par un conduit perméable au gaz avec une chambre de mesure de volume plus petit que la cuve sous pression et **en ce que**, pendant la sortie du gaz pulsé de la cuve sous pression dans le conduit pour le gaz épuré et vers les éléments filtrants, on mesure et on contrôle la différence Δp = p1 - p2 de pression, p1 étant la pression statique dans la chambre de mesure et p2 étant la pression statique dans la cuve sous pression.

2. Procédé suivant la revendication 1, **caractérisé en ce que** l'on déclenche un signal d'alerte lorsque le maximum de la différence sous pression devient inférieur à une valeur minimum prescrite.

3. Procédé suivant la revendication 1 ou 2, **caractérisé en ce que** le conduit entre la cuve sous pression et la chambre de mesure a un diaphragme déterminant la section transversale d'écoulement.
